# EUROPÄISCHE PATENTSCHRIFT

(11) **EP 3 781 888 B1**
(45) Veröffentlichungstag und Bekanntmachung des Hinweises auf die Patenterteilung: **23.03.2022**
(21) Anmeldenummer: 19721508.0
(22) Anmeldetag: 16.04.2019
(51) Int. Cl.: F28D 17/04, F01K 3/00, F01K 23/10, F28D 20/00

(54) **VERFAHREN ZUM BETREIBEN EINER REGENERATIVEN WÄRMESPEICHERANORDNUNG UND WÄRMESPEICHERANORDNUNG**
METHOD FOR OPERATING A REGENERATIVE HEAT RESERVOIR ARRANGEMENT AND HEAT RESERVOIR ARRANGEMENT
PROCÉDÉ SERVANT À FAIRE FONCTIONNER UN ENSEMBLE ACCUMULATEUR DE CHALEUR RÉGÉNÉRATIF ET ENSEMBLE ACCUMULATEUR DE CHALEUR

(30) Priorität: 18.04.2018 DE 102018003162
(43) Veröffentlichungstag der Anmeldung: 24.02.2021
(73) Patentinhaber: Carbon-Clean Technologies GmbH, 50825 Köln (DE)
(72) Erfinder: KNOP, Klaus, 79295 Sulzburg (DE)
(74) Vertreter: Schleitzer, Dirk-Karsten
(86) Internationale Anmeldenummer: PCT/EP2019/059804
(87) Internationale Veröffentlichungsnummer: WO 2019/201918

(56) Entgegenhaltungen:
- EP-A1- 2 574 865
- WO-A1-2018/020411
- DE-A1-102014 017 346
- US-A1- 2012 312 496

## Beschreibung

Die Erfindung betrifft ein Verfahren zum Betreiben einer regenerativen Wärmespeicheranordnung, wobei die Wärmespeicheranordnung wenigstens einen Gaserhitzer zur Erhitzung eines Trägergases, insbesondere zur Erhitzung von Luft, eine Wärmespeicherreihe mit einer Mehrzahl von Wärmespeichermodulen und wenigstens einen Verdichter aufweist, wobei während eines Beladungszyklus wenigstens ein Wärmespeichermodul, vorzugsweise eine Mehrzahl von nachfolgenden Wärmespeichermodulen der Wärmespeicherreihe, von im Gaserhitzer erhitztem Trägergas durchströmt und durch Wärmeübertragung von dem erhitzten Trägergas an ein Wärmespeichermaterial des Wärmespeichermoduls thermisch beladen und das Trägergas bei der Beladung abgekühlt wird, wobei das abgekühlte Trägergas, wenn die Trägergastemperatur nach dem Beladen eines Wärmespeichermoduls eine Mindestbeladungstemperatur eines in der Wärmespeicherreihe nachfolgenden Wärmespeichermoduls erreicht oder überschreitet, dem nachfolgenden Wärmespeichermodul zur Beladung zugeführt wird, und wobei eine Kreislaufführung des Trägergases vorgesehen ist, wenn die Trägergastemperatur die Mindestbeladungstemperatur des nachfolgenden Wärmespeichermoduls unterschreitet, und das Trägergas bei der Kreislaufführung dem Verdichter zugeführt und nach der Verdichtung zum Gaserhitzer für eine erneute Erhitzung des Trägergases zurückgeführt wird.

Darüber hinaus betrifft die Erfindung auch eine regenerative Wärmespeicheranordnung, ausgebildet und/oder eingerichtet, um nach einem Verfahren der zuvor beschriebenen Art betrieben zu werden, mit wenigstens einem Gaserhitzer zur Erhitzung eines Trägergases, insbesondere von Luft, mit wenigstens einer Wärmespeicherreihe mit einer Mehrzahl von Wärmespeichermodulen und mit wenigstens einem Verdichter, wobei wenigstens ein Wärmespeichermodul, vorzugsweise eine Mehrzahl von nachfolgenden Wärmespeichermodulen der Wärmespeicherreihe, während eines Beladungszyklus von im Gaserhitzer erhitztem Trägergas durchströmbar und durch Wärmeübertragung von dem erhitzten Trägergas an ein Wärmespeichermaterial des Wärmespeichermoduls thermisch beladbar ist, wobei während des Beladungszyklus eine Kreislaufführung des Trägergases vorgesehen und bei der Beladung abgekühltes Trägergas nach dem Durchströmen des wenigstens einen Wärmespeichermoduls, vorzugsweise nach dem Durchströmen einer Mehrzahl von nachfolgenden Wärmespeichermodulen der Wärmespeicherreihe, dem Verdichter zuführbar und über den Verdichter zum Gaserhitzer zurückführbar ist.

Schließlich betrifft die vorliegende Erfindung ein Verfahren zum Ausgleich von Lastspitzen bei der Erzeugung von elektrischer Energie und/oder insbesondere zur dezentralen Erzeugung von elektrischer Energie durch Nutzung der Wärme von erhitztem Trägergas für die Stromerzeugung in einem thermoelektrischen Speicherkraftwerk und/oder zur Nutzung der Wärme von erhitztem Trägergas zur Prozessdampf- und/oder zur Fernwärmeerzeugung und/oder zur Einkopplung von Wärme in einen Vorwärmprozess, wobei das Speicherkraftwerk eine regenerative Wärmespeicheranordnung aufweist und die Wärmespeicheranordnung wie oben beschrieben betrieben wird. Das Verfahren zum Ausgleich von Lastspitzen und/oder zur dezentralen Erzeugung von elektrischer Energie und/oder zur Nutzung der Wärme von erhitztem Trägergas sieht in diesem Zusammenhang folgende Schritte vor:
- Erhitzung von Trägergas, insbesondere von Heißluft, in wenigstens einem Gaserhitzer,
- thermische Beladung von wenigstens einem Wärmespeichermodul einer Mehrzahl von Wärmespeichermodulen des Speicherkraftwerks durch Wärmeabgabe von dem im Gaserhitzer erhitzten Trägergas an ein Wärmespeichermaterial des Wärmespeichermoduls,
- zeitversetzte thermische Entladung von wenigstens einem Wärmespeichermodul, vorzugsweise einer Mehrzahl von dem Wärmespeichermodulen, wobei wenigstens ein Wärmespeichermodul von kälterem Trägergas, insbesondere von Kaltluft, durchströmt und Wärme von dem Wärmespeichermaterial an das kältere Trägergas zur Erhitzung des Trägergases übertragen wird und
- Nutzung des bei der Entladung des wenigstens einen Wärmespeichermoduls erhitzten Trägergases zur Stromerzeugung und/oder zur Prozessdampf- und/oder zur Fernwärmeerzeugung und/oder zur Einkopplung von Wärme.

Der Ausbau erneuerbarer Energien führt zu einer Veränderung der Erzeugungsstruktur im Strommarkt. Angebotsabhängige elektrische Energie aus erneuerbaren Energiequellen, wie Windkraft, Biomasse und Photovoltaik, wird zukünftig einen Großteil der Stromversorgung ausmachen. Die verfügbaren Technologien zur Stromerzeugung aus regenerativen Energiequellen lassen eine genaue Vorhersage der erzeugten Strommengen jedoch nur eingeschränkt zu, weshalb Fluktuationen auf unterschiedlichen Zeitskalen auftreten, nämlich von saisonalen Schwankungen über den Tagesverlauf bis hin zu kurzfristigen Schwankungen. Diese Fluktuationen verstärken die in der Stromnachfrage auftretenden Schwankungen und erhöhen den Bedarf an Ausgleichsmöglichkeiten für Lastspitzen. Der Ausgleich von Lastspitzen findet derzeit in der Regel über verschiedene Strommärkte statt, an derem Handel Betreiber unterschiedlicher Erzeugungs- und Speichertechnologien teilnehmen. Darüber hinaus steht das Energiesystem vor einer Umstellung von einer zentralen hin zu einer dezentralen Erzeugung von elektrischer Energie aus fossilen und regenerativ erzeugten Energieträgern. Daraus ergeben sich neue Anforderungen an die Netzinfrastruktur, da sich die Aufgabe der Netzstabilisierung zunehmend von der Übertragungsnetzebene auf die Ebene der Verteilnetze verlagert. In diesen ist jedoch bislang wenig bis keine Infrastruktur zur aktiven Steuerung der Netze vorhanden.

Aus der DE 10 2014 017 346 A1 ist ein gattungsgemäßes Verfahren zum Betreiben einer regenerativen Wärmespeicheranordnung bekannt. Das bekannte Verfahren sieht eine Nutzung von Wärme von erhitztem Trägergas, insbesondere von Heißluft, für die Stromerzeugung in einem thermoelektrischen Speicherkraftwerk vor, wobei in wenigstens einem Gaserhitzer des Speicherkraftwerks zunächst ein Trägergas, wie Luft, auf eine bestimmte Beladungs-Solltemperatur erwärmt wird. Das Trägergas dient zur thermischen Beladung einer Mehrzahl von Wärmespeichermodulen des Wärmespeicherkraftwerks, wobei es zu einer Wärmeabgabe von dem heißen Trägergas an ein Wärmespeichermaterial des Wärmespeichermoduls kommt (Beladungszyklus). Um Heißgas in ausreichender Menge und/oder mit einer ausreichend hohen Beladungs-Solltemperatur für die Beladung der Wärmespeichermodule zu erzeugen, können mehrere Gaserhitzer eingesetzt werden. Eine maximale Beladungs-Solltemperatur bei der Erhitzung des Trägergases in dem Gaserhitzer kann 1000 °C bis 1.300 °C, vorzugsweise 1.100 °C bis 1.200 °C, betragen.

Bei der zeitversetzten thermischen Endladung von wenigstens einem Wärmespeichermodul der Wärmespeicherreihe wird bei dem gattungsgemäßen Verfahren die gespeicherte nutzbare Wärme bzw. der nutzbare Wärmeinhalt des Wärmespeichermoduls zur Erwärmung vom kalten Trägergas, insbesondere von Kaltluft, genutzt. Hierzu wird wenigstens ein Wärmespeichermodul von kaltem Trägergas durchströmt und Wärme wird von dem Wärmespeichermaterial auf das Trägergas übertragen (Entladungszyklus). Das Trägergas wird beim Durchströmen des Wärmspeichermoduls auf eine bestimmte Entladungstemperatur erhitzt. Die für eine Wärmeübertragung erforderliche Entladungs-Solltemperatur kann 500 °C bis 900 °C, vorzugsweise 600 °C bis 800 °C, betragen. Die Wärme des bei einem Entladungszyklus erzeugten heißen Trägergases kann dann beispielsweise an ein Arbeitsfluid übertragen werden, dass in einem Dampfkraftprozess zur Stromerzeugung genutzt werden kann.

Erfolgt die Erwärmung des Trägergases in dem Gaserhitzer durch Umwandlung von elektrischer Energie in thermische Energie, wobei der Gaserhitzer zu diesem Zweck wenigstens einen elektrischen Heizwiderstand aufweisen kann, können das erfindungsgemäße Verfahren und das erfindungsgemäße Speicherkraftwerk einen Beitrag zum Lastmanagement im Stromnetz leisten, wobei zu Zeiten hoher Stromerzeugung und geringem Strombedarf während eines Beladungszyklus elektrische Energie in Form von Wärme gespeichert wird. Bei Lastspitzen wird dann in einem Entladungszyklus wenigstens ein Wärmespeichermodul entladen und das so erzeugte heiße Trägergas zur Stromerzeugung eingesetzt, beispielsweise zur Verdampfung von Wasser für einen Dampfkraftprozess. Die erzeugte elektrische Energie kann wieder in das Stromnetz abgegeben werden. Ein Betreiber des erfindungsgemäßen Speicherkraftwerkes kann Systemdienstleistungen anbieten und am Regelenergiemarkt teilnehmen. Durch die eingesetzten Wärmespeichermodule ist eine einfache und kostengünstige Speicherung von elektrischer Energie in Form von Wärme möglich, wobei elektrische Leistung bei kurzzeitigen hohen Verbrauchsspitzen flexibel und in sehr kurzer Zeit sowie kostengünstig zur Verfügung gestellt werden kann.

Im Übrigen wird der Offenbarungsgehalt der DE 10 2014 017 346 A1 vollumfänglich in den Offenbarungsgehalt der vorliegenden Beschreibung der Erfindung einbezogen. Dies betrifft insbesondere die konstruktive und anlagentechnische Ausgestaltung der in der DE 10 2014 017 346 A1 beschriebenen Wärmespeicheranordnung und des beschriebenen Wärmespeicherkraftwerks.

Sind die Wärmespeichermodule in Reihe gestaltet und bilden eine Wärmespeicherreihe, wobei das auf eine Beladungs-Solltemperatur in dem Gaserhitzer erhitzte Trägergas während eines Beladungszyklus nachfolgend die Wärmespeichermodule der Wärmespeicherreihe durchströmt und die Wärmespeichermodule erwärmt werden, verlässt das Trägergas zu Beginn des Beladungszyklus das erste Wärmespeichermodul der Wärmespeicherreihe zunächst kalt. Mit steigender Wärmeaufnahme der Speichermasse dieses Wärmespeichermoduls steigt die Temperatur des aus dem Wärmespeichermodul ausströmenden Trägergases.

Erreicht oder überschreitet die Temperatur des Trägergases am Austritt aus einem Wärmespeichermodul eine vorgegebene Mindestbeladungstemperatur, wird das Trägergas einem in der Wärmespeicherreihe nachfolgenden Wärmespeichermodul zugeführt und zur Beladung dieses Wärmespeichermoduls genutzt. Dieser Vorgang wiederholt sich für alle Wärmespeichermodule der Wärmespeicherreihe, die nachfolgend beladen werden. Aus dem zuletzt beladenen Wärmespeichermodul der Wärmespeicherreihe tritt das Trägergas dann abgekühlt beispielsweise auf dem Temperaturniveau der Mindestbeladungstemperatur aus.

Kühlt das Trägergas bei der Beladung eines Wärmespeichermoduls unter die Mindestbeladungstemperatur ab, sieht das aus der DE 10 2014 017 346 A1 bekannte Betriebsverfahren eine Kreislaufführung des Trägergases während des Beladungszyklus vor. Das abgekühlte Trägergas wird dabei einem Verdichter bzw. Gebläse zugeführt, dort verdichtet und nach der Verdichtung zum Gaserhitzer zurückgeführt. Dort wird das Trägergas erneut erhitzt und anschließend zur weiteren Beladung der Wärmespeicherreihe genutzt.

Die maximale Temperatur, mit der das Trägergas bei der Kreislaufführung zum Verdichter geführt werden kann, ist gekoppelt an die material- und volumenbedingte Begrenzung der Eintrittstemperatur in den Verdichter und liegt in der Regel unterhalb von 250 °C, insbesondere bei ca. 200 °C. Zudem komm es bei höheren Trägergastemperaturen zu einer Zunahme der Leistungsaufnahme des Verdichters.

Die maximale Temperatur, mit der das Trägergas bei der Kreislaufführung zum Verdichter geführt wird, liegt nur geringfügig unter der Mindestbeladungstemperatur, bei der das Trägergas noch für die Beladung eines Wärmespeichermoduls genutzt wird. Im Ergebnis ist die zulässige Höhe der Mindestbeladungstemperatur ebenfalls gekoppelt an die zulässige Höhe der Verdichtereintrittstemperatur.

Simulationsrechnungen der Anmelderin haben bestätigt, dass sich mit dem bekannten Verfahren zum Betreiben einer regenerativen Wärmespeicheranordnung eine maximale Ausnutzung der Wärmespeichermodule (je nach Anzahl der Wärmespeichermodule) zwischen 40 % und 60 % erreichen lässt. Dies bezieht sich auf einen Zyklusbetrieb der Speicheranordnung (beladen/entladen). Unter "Ausnutzung der Speicheranordnung" wird erfindungsgemäß der für die Erzeugung von Heißluft bei der Speicherentladung aktiv zur Verfügung stehende Energieinhalt des Speichers bezogen auf einen theoretisch maximal möglichen Energieinhalt bei beispielsweise 1.200 °C verstanden. Die geringe Ausnutzung bei dem bekannten Verfahren zum Betreiben einer regenerativen Wärmespeicheranordnung erhöht die Kosten der Energiespeicherung, da ein großer Teil des Speichermaterials nicht zur aktiven Speicherung von thermischer Energie genutzt wird.

Aufgabe der vorliegenden Erfindung ist es, ein Verfahren zum Betreiben einer regenerativen Wärmespeicheranordnung, eine Wärmespeicheranordnung und ein Verfahren zum Ausgleich von Lastspitzen und/oder zur insbesondere dezentralen Erzeugung von elektrischer Energie und/oder zur Nutzung der Wärme von erhitztem Trägergas, jeweils der eingangs genannten Art, zur Verfügung zu stellen, die sich durch eine verbesserte Betriebsweise der Wärmespeicher-anordnung auszeichnen, wobei insbesondere eine höhere Ausnutzung der Wärmespeicheranordnung im Zyklusbetrieb bei niedriger mechanisch-thermischer Belastung der Anlagenkomponenten der Wärmespeicheranordnung möglich sein soll.

Die vorgenannte Aufgabe wird durch ein Verfahren zum Betreiben einer regenerativen Wärmespeicheranordnung mit den Merkmalen von Patentanspruch 1, durch eine Wärmespeicheranordnung mit den Merkmalen von Patentanspruch 8 und durch ein Verfahren zum Ausgleich von Lastspitzen bei der Erzeugung von elektrischer Energie und/oder zur insbesondere dezentralen Erzeugung von elektrischer Energie und/oder zur Nutzung von Wärme von erhitztem Trägergas mit den Merkmalen von Patentanspruch 9 gelöst. Vorteilhafte Ausgestaltungen der Erfindung sind Gegenstand der Unteransprüche.

Das erfindungsgemäße Verfahren zum Betreiben einer regenerativen Wärmespeicheranordnung sieht vor, für die Beladung der Wärmespeichermodule eine Mindestbeladungstemperatur des Trägergases festzulegen bzw. vorzugeben, die oberhalb einer zulässigen Solltemperatur am Verdichtereintritt liegt. Weist das Trägergas nach dem Beladen eines Wärmespeichermoduls und Austritt aus dem Wärmespeichermodul zumindest die Mindestbeladungstemperatur auf, wird das Trägergas wie bei dem aus der DE 10 2014 017 346 A1 bekannten Verfahren zur Beladung eines nachfolgenden Wärmespeichermoduls der Wärmespeicherreihe genutzt. Unterschreitet die Trägergastemperatur die Mindestbeladungstemperatur, wird dagegen das Trägergas im Kreislauf über den Verdichter zum Gaserhitzer geführt und dort nach erneuter Erhitzung zur Beladung (weiteren) von wenigstens einem Wärmespeichermodul der Wärmespeicherreihe eingesetzt. Für die Durchführung des erfindungsgemäßen Betriebsverfahrens ist eine Mess-, Steuer- und/oder Regelungseinrichtung vorgesehen. Hierbei wird die Temperatur des Trägergases nach dem Austritt aus einem Wärmespeichermodul während eines Beladungszyklus gemessen und mit der vorgegebenen Mindestbeladungstemperatur (Sollwert) verglichen. In Abhängigkeit von der Trägergastemperatur wird dann mittels geeigneter Steuer- und/oder Regelventile der Volumenstrom des Trägergases und die Strömungsführung gesteuert und/oder geregelt.

Da die Eintrittstemperatur in den Verdichter material- und volumenbedingt auf eine zulässige Solltemperatur begrenzt ist, sieht die Erfindung eine Kühlung des zu rezyklierenden Trägergases bei der Kreislaufführung während eines Beladungszyklus vor, wenn die Trägergastemperatur des rezyklierten Trägergases über der zulässigen Solltemperatur am Verdichtereintritt liegt.

Das erfindungsgemäße Betriebsverfahren ist mit einer Reihe von Vorteilen verbunden. Zum einen führt die höhere Mindestbeladungstemperatur zu einer höheren maximalen Ausnutzung der beschriebenen Speicheranordnung. In Zusammenhang mit der Erfindung durchgeführte Simulationsrechnungen haben belegt, dass die maximale Ausnutzung der Wärmespeicheranordnung bei beispielsweise fünf Wärmespeichermodulen und einer Entladungstemperatur von 760 °C bis zu 85 % erreichen kann. Weitere Wärmespeichermodule können die Ausnutzung auf über 90 % erhöhen. Die Steigerung der Ausnutzung der Speicheranordnung führt zu einer Verringerung der Wärmespeicherkosten, da erfindungsgemäß ein größerer Teil des Speichermaterials zur aktiven Speicherung von thermischer Energie genutzt werden kann. Die Kühlung des zu rezyklierenden Trägergases vor dem Eintritt in den Verdichter lässt den Einsatz kostengünstiger Maschinen zu und gewährleistet eine geringe Leistungsaufnahme des Verdichters.

Die Trägergastemperatur am Austritt aus dem letzten Wärmespeichermodul der Wärmespeicherreihe kann vorzugsweise der Mindestbeladungstemperatur entsprechen. Dies lässt sich durch eine entsprechende Steuerung und/oder Regelung der Trägergasvolumenströme einstellen, die dem letzten Wärmespeichermodul zur Beladung zugeführt werden.

Beim Entladungszyklus wird wenigstens ein thermisch beladenes Wärmespeichermodul der Wärmespeicherreihe, vorzugsweise eine Mehrzahl von nachfolgenden Wärmespeichermodulen der Wärmespeicherreihe, von kälterem Trägergas, insbesondere von Kaltluft, durchströmt und durch Wärmeübertragung an das kältere Trägergas thermisch entladen, wobei das kältere Trägergas bei der thermischen Entladung des Wärmespeichermoduls erhitzt wird und dann für eine weitere Nutzung, insbesondere zur Erzeugung von elektrischer Energie und/oder zur Wärmenutzung, zur Verfügung steht.

Die Mindestbeladungstemperatur kann erfindungsgemäß mehr als 250 °C, vorzugsweise mehr als 350 °C, weiter vorzugsweise zwischen 350 °C und 600 °C, besonders bevorzugt ca. 400 °C bis 500 °C, betragen. Die Temperaturdifferenz zwischen der Mindestbeladungstemperatur und der Solltemperatur am Verdichtereintritt kann vorzugsweise mehr als 100 °C, weiter vorzugsweise mehr als 150 °C, betragen. Damit werden auch höhere Temperaturen bei Entladung der Speicheranordnung und damit hohe Ausnutzungsgrade erreicht.

Bei der erfindungsgemäße Wärmespeicheranordnung ist im Strömungsweg des Trägergases zur Kühlung des Trägergases bei der Kreislaufführung wenigstens eine zwischen der Wärmespeicherreihe und dem Verdichter angeordnete Wärmeübertragungseinrichtung vorgesehen. Vorzugsweise erfolgt eine Kühlung des Trägergases bei der Kreislaufführung durch Wärmeübertragung an zum Gaserhitzer zurückgeführtes verdichtetes Trägergas, so dass das verdichtete Trägergas vor dem Eintritt in den Gaserhitzer vorgewärmt wird. Es kann eine indirekte Wärmeübertragung mittels Rekuperator vorgesehen sein, wobei auch eine Wärmeübertragung zwischen dem zu rezyklierenden Trägergas vor dem Verdichtereintritt und nach dem Verdichteraustritt über einen Kühlkreislauf vorgesehen sein kann. Als Kühlmittel kann ein Thermoöl eingesetzt werden. Darüber hinaus kann eine Wärmeübertragung auch mit einem Regenerator, vorzugsweise einem Rotationswärmeübertrager, wie einem Ljungström-Regenerator, erfolgen, was kurze Umschaltzeiten ermöglicht. Der direkte Wärmeaustausch und der Wärmeaustausch über einen Regenerator lassen höhere Mindestbeladungstemperaturen zu, was wiederum zu höheren Ausnutzungsgraden sowie höheren Temperaturen bei der Entladung der Speicheranlage führt.

Bei Verwendung von Rekuperatoren und/oder Regeneratoren können Mindestbeladungstemperaturen von mehr als 400 °C vorgegeben werden. Der Wärmetausch über einen Kühlkreislauf unter Verwendung von Thermoöl als Kühlmittel kann dagegen Mindestbeladungstemperaturen von weniger als 400 °C ermöglichen.

Es kann auch eine mehrstufige Kühlung des zu rezyklierenden Trägergases vor dem Eintritt in den Verdichter vorgesehen werden. In diesem Zusammenhang kann das Trägergas bei der Kreislaufführung durch Wärmeübertragung an zum Gaserhitzer zurückgeführtes verdichtetes Trägergas lediglich auf eine Temperatur oberhalb der Solltemperatur am Verdichtereintritt gekühlt werden, beispielsweise auf eine Temperatur oberhalb von 60 °C, vorzugsweise von 80 °C bis 100 °C. Es kann dann im Strömungsweg des abgekühlten Trägergases nach einer ersten Wärmeübertragungseinrichtung der oben beschriebenen Art vor dem Verdichter wenigstens eine weitere Wärmeübertragungseinrichtung vorgesehen werden, wobei das Trägergas nach der Wärmeübertragung an zum Gaserhitzer zurückgeführtes verdichtetes Trägergas in der weiteren Wärmeübertragungseinrichtung auf die Solltemperatur am Verdichtereintritt gekühlt wird. Damit lässt sich eine vorgegebene Solltemperatur am Verdichtereintritt sicher einhalten. Bei der weiteren Wärmeübertragungseinrichtung kann es sich beispielsweise um einen Rekuperator handeln, wobei Wärme des Trägergases bei indirekter Wärmeübertragung auf ein Kühlmittel, insbesondere Wasser, übertragen wird.

Die Solltemperatur am Verdichtereintritt kann weniger als 70 °C, vorzugsweise weniger als 60 °C, weiter vorzugsweise 50 °C oder weniger, betragen.

Darüber hinaus sieht eine weiter bevorzugte Ausführungsform der Erfindung vor, dass zu rezyklierendes Trägergas während des Beladungszyklus bei der Kreislaufführung vor dem Eintritt in den Verdichter mit heißem Trägergas aus dem Gaserhitzer zusammengeführt wird, um die Temperatur des Trägergases zu regeln. Insbesondere lässt sich so die Temperatur des bei der Kreislaufführung dem Verdichter zugeführten Trägergases im Wesentlichen konstant halten, was die Regelung des Verdichters vereinfacht. Darüber hinaus wird dem Gaserhitzer Trägergas auf einem im Wesentlichen gleichbleibenden Temperaturniveau zugeführt, was ebenfalls von Vorteil ist.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

In der Zeichnung zeigen:
- Fig. 1: ein schematisches Verfahrensfließbild eines bekannten Verfahrens zum Betreiben einer regenerativen Wärmespeicheranordnung,
- Fig. 2: ein schematisches Verfahrensfließbild eines erfindungsgemäßen Verfahrens zum Betrieben einer regenerativen Wärmespeicheranordnung,
- Fig. 3: ein schematisches Verfahrensfließbild einer Wärmeübertragungseinrichtung zur Kühlung eines im Kreislauf geführten Trägergases bei dem erfindungsgemäßen Verfahren gemäß einer ersten Ausführungsform der Erfindung,
- Fig. 4: ein schematisches Verfahrensfließbild einer Wärmeübertragungseinrichtung zur Kühlung eines im Kreislauf geführten Trägergases bei dem erfindungsgemäßen Verfahren gemäß einer zweiten Ausführungsform der Erfindung,
- Fig. 5: ein schematisches Verfahrensfließbild einer Wärmeübertragungseinrichtung zur Kühlung eines im Kreislauf geführten Trägergases bei dem erfindungsgemäßen Verfahren gemäß einer dritten Ausführungsform der Erfindung,
- Fig. 6: ein schematisches Teil-Verfahrensfließbild des in Fig. 2 gezeigten erfindungsgemäßen Verfahrens zum Betreiben einer regenerativen Wärmespeicheranordnung bei der Beladung eines ersten Wärmespeichermoduls einer Speicherreihe der Wärmespeicheranordnung,
- Fig. 7: ein schematisches Teil-Verfahrensfließbild des in Fig. 2 gezeigten erfindungsgemäßen Verfahrens zum Betreiben einer regenerativen Wärmespeicheranordnung bei der Beladung des ersten Wärmespeichermoduls und eines nachfolgenden zweiten Wärmespeichermoduls der Speicherreihe der Wärmespeicheranordnung,
- Fig. 8: ein schematisches Teil-Verfahrensfließbild des in Fig. 2 gezeigten erfindungsgemäßen Verfahrens zum Betreiben einer regenerativen Wärmespeicheranordnung bei der Beladung des zweiten Wärmespeichermoduls und eines in der Wärmespeicherreihe nachfolgenden dritten Wärmespeichermoduls der Speicherreihe der Wärmespeicheranordnung,
- Fig. 9: ein schematisches Teil-Verfahrensfließbild des in Fig. 2 gezeigten erfindungsgemäßen Verfahrens zum Betreiben einer regenerativen Wärmespeicheranordnung bei der Beladung eines dritten Wärmespeichermoduls und eines in der Wärmespeicherreihe nachfolgenden vierten Wärmespeichermoduls der Speicherreihe der Wärmespeicheranordnung,
- Fig. 10: ein schematisches Teil-Verfahrensfließbild des in Fig. 2 gezeigten erfindungsgemäßen Verfahrens bei der Endladung des letzten Wärmespeichermoduls der Wärmespeicherreihe,
- Fig. 11: ein schematisches Teil-Verfahrensfließbild des in Fig. 2 gezeigten erfindungsgemäßen Verfahrens bei der Endladung der beiden letzten Wärmespeichermodule der Wärmespeicherreihe und
- Fig. 12-14: Temperaturprofile, die eine Steigerung der Ausnutzung der Wärmespeicherreihe durch Steigerung der Mindestbeladungstemperatur der Wärmespeichermodule und Kühlung des Trägergases nach dem Austritt aus der Wärmespeicherreihe und vor dem Verdichter zeigen.

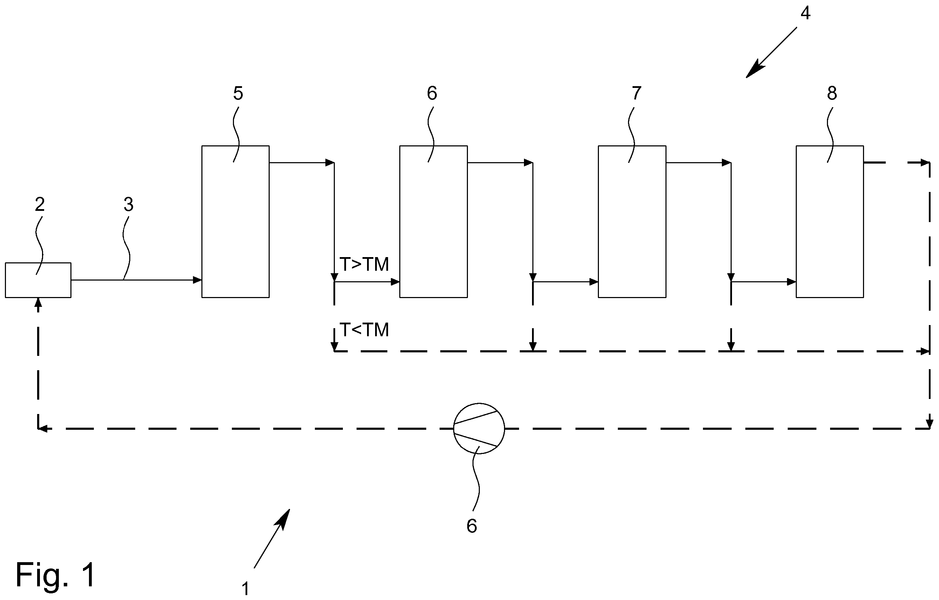

In Fig. 1 ist eine bekannte Wärmespeicheranordnung 1 mit wenigstens einem Gaserhitzer 2 zum Erhitzen eines Trägergases 3, insbesondere von Luft, und mit einer Wärmespeicherreihe 4 dargestellt, wobei die Wärmespeicherreihe 4 beispielhaft vier weiter beispielhaft in Reihe geschaltete Wärmespeichermodule 5 bis 8 aufweist. Es versteht sich, dass auch mehr oder weniger als vier Wärmespeichermodule 5 bis 8 eine Wärmespeicherreihe 4 bilden können.

Darüber hinaus ist ein Gebläse bzw. ein Verdichter 6 vorgesehen.

Die Wärmespeicheranordnung 1 kann der in der Offenlegungsschrift DE 10 2014 017 346 A1 beschriebenen Wärmespeicheranordnung entsprechen und nach dem in der vorgenannten Offenlegungsschrift beschriebenen Verfahren betrieben werden. Der Offenbarungsgehalt der DE 10 2014 017 346 A1 wird sowohl im Hinblick auf Art und Aufbau der Wärmespeicheranordnung 1 als auch im Hinblick auf das bekannte Betriebsverfahren vollumfänglich in den Offenbarungsgehalt dieser Beschreibung einbezogen.

Während eines Beladungszyklus bzw. beim Beladevorgang der Wärmespeichermodule 5 bis 8 tritt zunächst hoch erhitzte Luft von mehr als 1.000 °C, insbesondere von 1200 °C, als Trägergas 3 aus einem beispielsweise elektrisch beheizten Gaserhitzer 2 in das erste Wärmespeichermodul 5 der Wärmespeicherreihe 4 ein. Während des Durchströmens des Wärmespeichermoduls 5 wird Wärme des Trägergases 3 an das Speichermaterial abgegeben. Das Trägergas 3 kann das erste Wärmespeichermodul 5 zunächst kalt verlassen.

Mit zunehmender Befüllung des ersten Wärmespeichermoduls 5 steigt die Temperatur des Trägergases 3 am Austritt des Wärmespeichermoduls 5, d.h. die das Wärmespeichermodul 5 verlassende Luft ändert mit zunehmender Beladung des ersten Wärmespeichermoduls 5 die Temperatur. Überschreitet die Trägergastemperatur T nach dem Beladen des ersten Wärmespeichermodus 5 eine vorgegebene Mindestbeladungstemperatur TM des in der Wärmespeicherreihe 4 nachfolgenden Wärmespeichermoduls 6, oder erreicht zumindest die Mindestbeladungstemperatur TM, so wird das Trägergas 3 dem nachfolgenden Wärmespeichermodul 6 zur Beladung zugeführt. Liegt die Trägergastemperatur T dagegen unterhalb der Mindestbeladungstemperatur TM, ist eine Kreislaufführung des Trägergases 3 vorgesehen, wobei das Trägergas 3 dem Verdichter 6 zugeführt und nach der Verdichtung zum Gaserhitzer 2 für eine erneute Erhitzung des Trägergases 3 und die anschließende Nutzung zur (weiteren) Beladung der Wärmespeichermodule 5 bis 8 zurückgeführt wird.

Die Mindestbeladungstemperatur wird bei dem bekannten Verfahren festgelegt durch die material- und volumenbedingte Begrenzung der Solltemperatur am Eintritt des Verdichters 6 und kann beispielsweise zwischen 200 °C und 250 °C liegen.

Die zuvor beschriebene Beladung der nachfolgenden Wärmespeichermodule 6 bis 8 entspricht dem beschriebenen Beladungsvorgang des Wärmespeichermoduls 5. Die Temperatur T des Trägergases 3 am Austritt aus dem letzten Wärmespeichermodul 8 kann der Mindestbeladungstemperatur TM entsprechen.

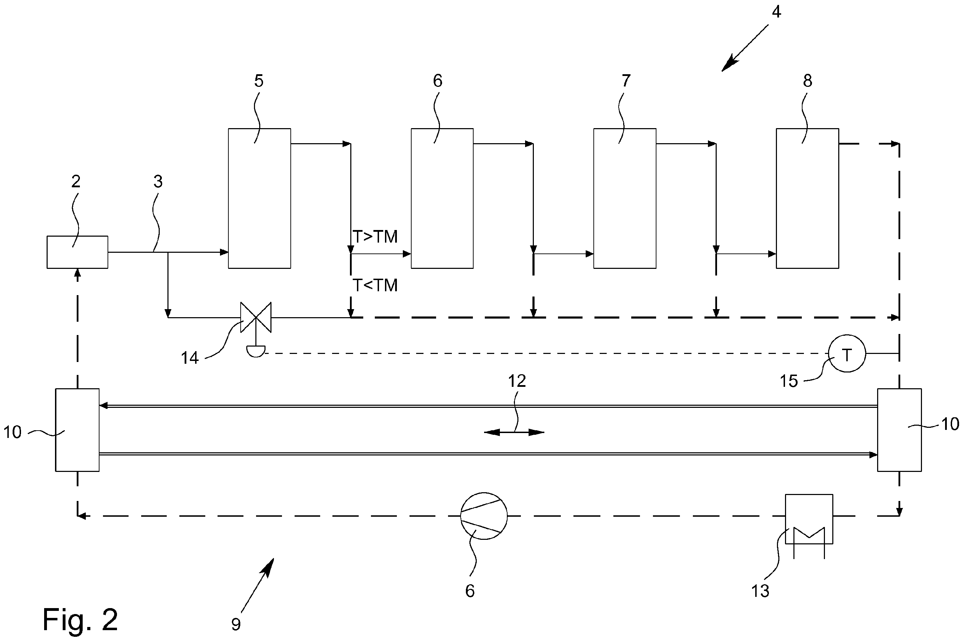

Fig. 2 zeigt ein neues Verfahren zum Betreiben einer regenerativen Wärmespeicheranordnung 9, wobei gleiche Bezugszeichen bau- und/oder funktionsgleiche Einheiten, Apparate oder Baugruppen der in den Fig. 1 und 2 gezeigten Wärmespeicheranordnungen 1,9 kennzeichnen.

Abweichend zu der in Fig. 1 gezeigten bekannten Wärmespeicheranordnung 1 weist die Wärmespeicheranordnung 9 aus Fig. 2 im Strömungsweg des Trägergases 3 zwischen der Speicherreihe 4 und dem Verdichter 6 eine schematisch dargestellte Wärmeübertragungseinrichtung 10 auf. Dadurch ist es möglich, zu rezyklierendes Trägergas 3 vor dem Eintritt in den Verdichter 6 zu kühlen und damit eine höhere Mindestbeladungstemperatur TM bei der Beladung der in der Wärmespeicherreihe 4 dem ersten Wärmespeichermodul 5 nachfolgenden weiteren Wärmespeichermodule 6, 7, 8 von beispielsweise 400 °C oder mehr vorzusehen, wobei die Mindestbeladungstemperatur oberhalb einer zulässigen Solltemperatur am Verdichtereintritt liegt. Die Verdichtereintrittstemperatur kann beispielsweise lediglich 50 °C bis 60 °C betragen.

Auch bei der in Fig. 2 gezeigten Wärmespeicheranordnung 9 ist während eines Beladungszyklus eine Kreislaufführung des Trägergases 3 vorgesehen, wenn die Trägergastemperatur T die Mindestbeladungstemperatur TM des nachfolgenden Wärmespeichermoduls 6, 7, 8 unterschreitet, wobei das Trägergas 3 bei der Kreislaufführung dem Verdichter 6 zugeführt und nach der Verdichtung für eine erneute Erhitzung des Trägergases 3 zum Gaserhitzer 2 zurückgeführt wird. Um der material- und/oder volumenbedingten Begrenzung der Eintrittstemperatur in den Verdichter 6 zu genügen und niedrige Verdichter-Eintrittstemperaturen zu erreichen, wird das Trägergas 3 bei der Kreislaufführung vor dem Eintritt in den Verdichter 6 in der Wärmeübertragungseinrichtung 10 gekühlt, wenn die Trägergastemperatur T oberhalb einer bestimmten Solltemperatur am Verdichtereintritt liegt. Durch die Erhöhung der Mindestbeladungstemperatur TM im Vergleich zu dem anhand von Fig. 1 beschriebenen bekannten Betriebsverfahren lässt sich eine höhere Ausnutzung der Wärmespeicheranordnung 9 erreichen, d.h. ein höheres Verhältnis des tatsächlich zur Verfügung stehenden Energieinhalts des Speichers bezogen auf den theoretisch möglichen Energieinhalt bzw. einen maximal möglichen Energieinhalt bei einer bestimmten Temperatur des erhitzten Trägergases 3 beim Austritt aus dem Gaserhitzer 2. Die Ausnutzung der Wärmespeicheranordnung 9 kann so bei dem neuen Betriebsverfahren mehr als 80 %, vorzugsweise bei mehr als 85 %, insbesondere bei mehr als 90 %, liegen.

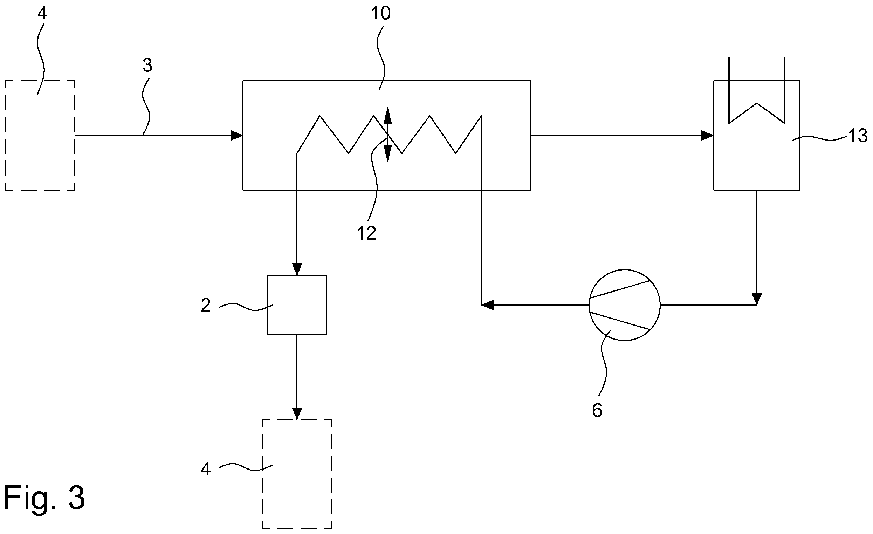

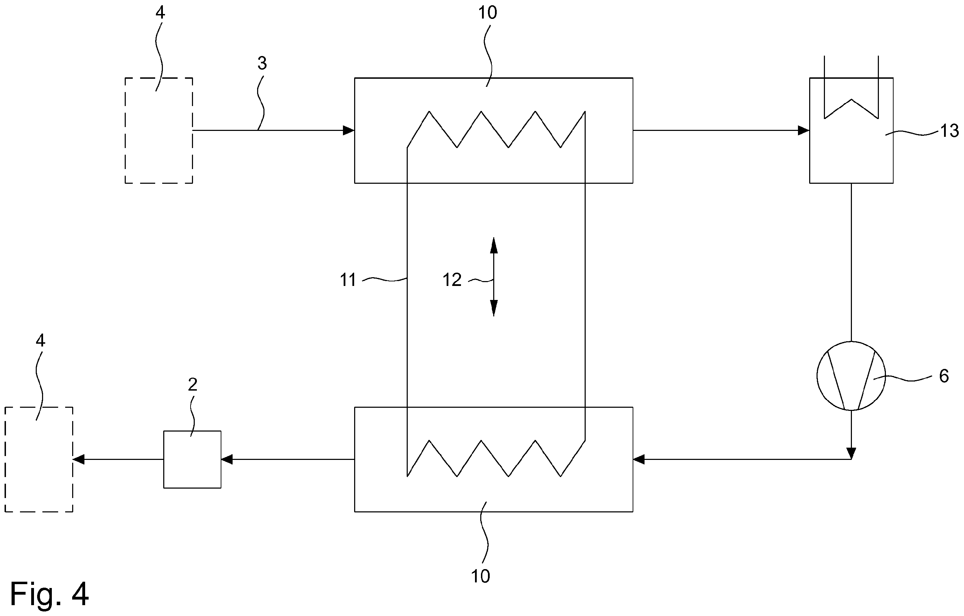

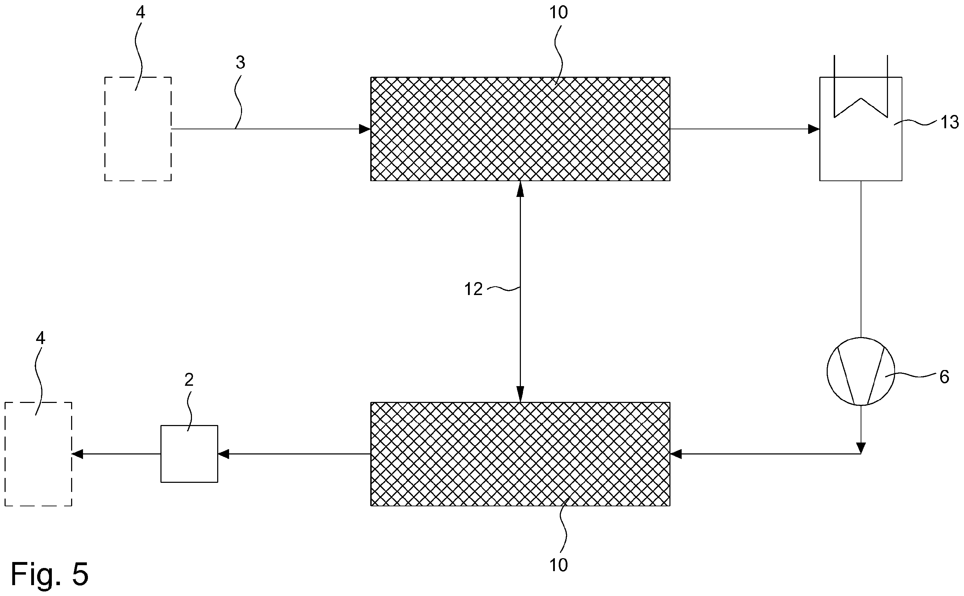

Wie sich auch aus Fig. 2 ergibt, wird das Trägergas 3 bei der Kreislaufführung in der Wärmeübertragungseinrichtung 10 durch Wärmeübertragung an zum Gaserhitzer 2 zurückgeführtes verdichtetes Trägergas 3 gekühlt. Die Wärmeübertragung zwischen wärmerem Trägergas 3 aus der Wärmespeicherreihe 4 (vor der Zuführung zum Verdichter 6) und kälterem Trägergas 3 (nach Austritt aus dem Verdichter 6) kann indirekt mittels Rekuperator(en) erfolgen, wobei die Trägergasströme räumlich durch eine wärmedurchlässige Wand getrennt sind (Fig. 3) oder es wird ein Kühlmittelkreislauf 11 vorgesehen (Fig. 4), wobei als Kühlmittel ein Thermoöl eingesetzt werden kann. Gemäß Fig. 5 kann die Wärmeübertragung auch halbindirekt erfolgen, wobei die beiden Trägergasströme zeitversetzt mit einem Wärmespeicher in Kontakt gebracht werden. Wärmetauscher dieser Klasse sind Regeneratoren. Der in der Wärmeübertragungseinrichtung 10 übertragene Wärmestrom ist in den Fig. 2 bis 5 schematisch durch den Pfeil 12 gezeigt.

Um das Trägergas 3 noch stärker abzukühlen und sicherzustellen, dass das Trägergas 3 vor dem Eintritt in den Verdichter 6 die Solltemperatur am Verdichtereintritt nicht überschreitet, kann im Strömungsweg des Trägergases 3 vor dem Verdichter 6 wenigstens ein Kühler 13 vorgesehen sein.

Wie sich weiter aus Fig. 2 ergibt, wird über ein Regelventil 14 heißes Trägergas 3 aus dem Gaserhitzer 2 und zu rezyklierendes Trägergas 3 aus einem Wärmespeichermodul 5 bis 8, dessen Trägergastemperatur unterhalb der Mindestbeladungstemperatur zur Beladung eines nachfolgenden Wärmespeichermoduls 6, 7, 8 liegt, zusammengeführt. Die Trägergasvolumenströme werden so aufeinander abgestimmt, dass sich am Mischpunkt eine konstante Temperatur, beispielsweise im Bereich der Mindestbeladungstemperatur, weiter beispielsweise ca. 400 °C bis 500 °C, einstellt. Vor dem Eintritt des Trägergases 3 in die Wärmeübertragungseinrichtung 10 kann eine Temperaturmesseinrichtung 15 vorgesehen sein, um die Temperatur des Trägergases 3 zu messen und die Trägergastemperatur am Mischpunkt mittels des Regelventils 14 zu regeln. Im Ergebnis wird der Wärmeübertragungseinrichtung 10 ein Trägergas 3 auf konstantem Temperaturniveau oberhalb der Solltemperatur am Verdichtereintritt zugeführt und kann beispielsweise im Gegenstrom mit einem kälteren Trägergas 3 vom Verdichter 6 abgekühlt werden. Das so vorgewärmte verdichtete Trägergas 3 kann dann über den Gaserhitzer 2 wieder in die Wärmespeicherreihe eingekoppelt und zur (weiteren) Beladung genutzt werden.

Durch Konstanthalten der Trägergastemperatur sinken die verfahrenstechnischen Anforderungen an den Verdichter 6 und der Regelungsaufwand. Darüber hinaus wirkt sich eine konstante Trägergastemperatur 3 vor dem Gaserhitzer 2 vorteilhaft auf die Betriebsweise und die Kosten des Gaserhitzers 2 aus.

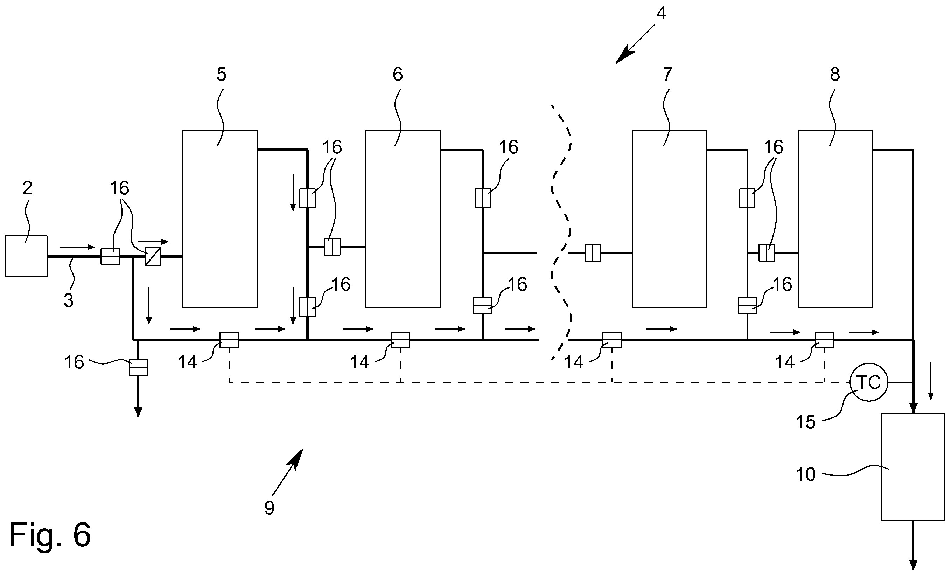

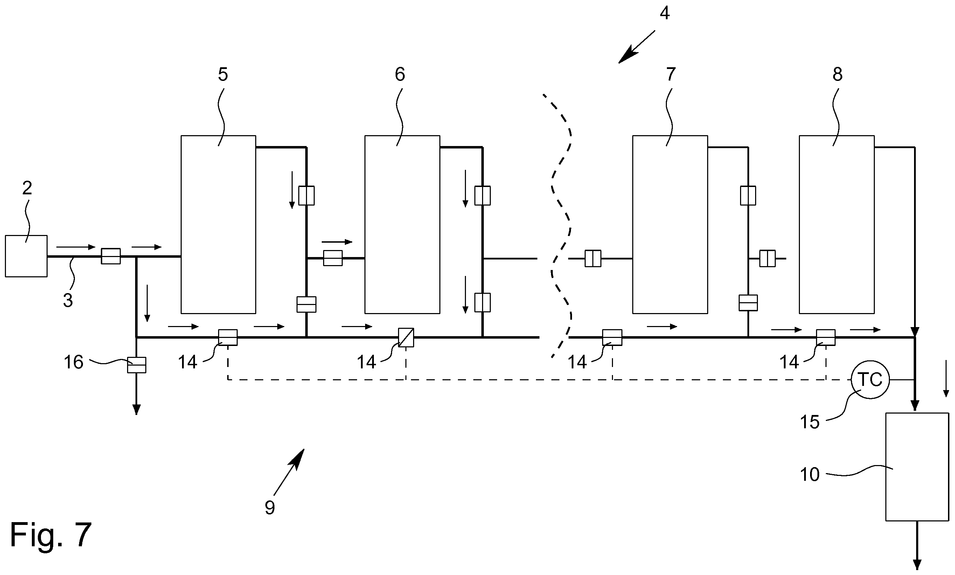

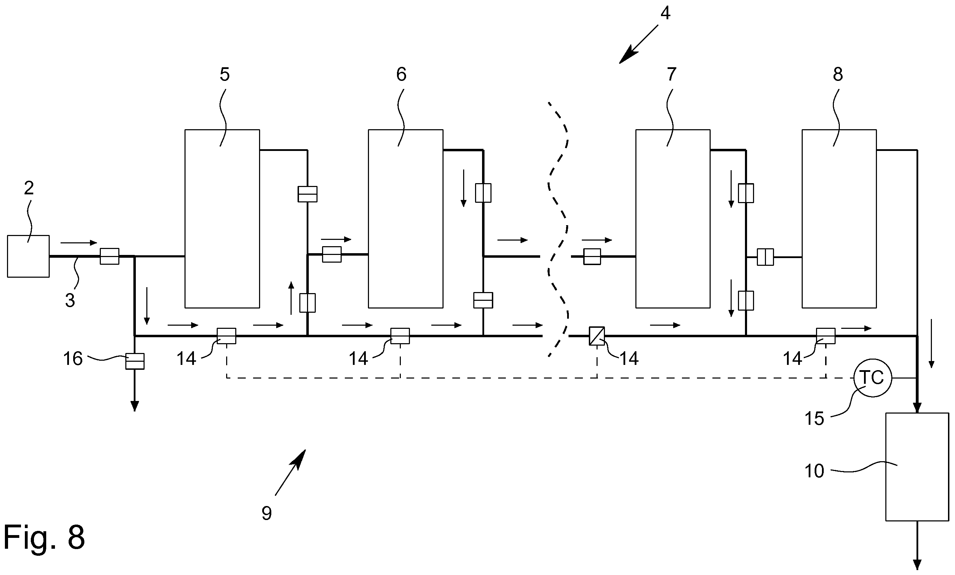

Die Fig. 6 bis 10 zeigen schematisch die Beladung der Wärmespeicherreihe 4 der in Fig. 2 gezeigten Wärmespeicheranordnung 9, wobei Fig. 6 die Beladung des ersten Wärmespeichermoduls 5 der Wärmespeicherreihe 4, Fig. 7 die Beladung der ersten beiden Wärmespeichermodule 5, 6 und Fig. 8 die Beladung des zweiten Wärmespeichermoduls 6 und des dritten Wärmespeichermoduls 7 darstellt. Bei dem in Fig. 8 gezeigten Beladungszustand ist das erste Wärmespeichermodul 5 bereits vollständig beladen und kann dann eine Speichertemperatur zwischen 600 und 1.000 °C, vorzugsweise 800 °C, aufweisen. In Fig. 8 ist eine Bypassführung des Trägergases 3 vorbei am ersten Wärmespeichermodul 5 gezeigt, wenn das erste Wärmespeichermodul 5 bereits vollständig beladen ist. Das Wärmespeichermodul 5 ist dann deaktiviert. Grundsätzlich ist es aber auch möglich, dass keine Bypassführung vorgesehen ist und ein Wärmespeichermodul 5-7 auch dann noch von heißem Trägergas 3 durchströmt wird, wenn es bereits vollständig beladen ist. Damit kann die Speichertemperatur des beladenen Wärmespeichermoduls 5-7 auf einer vorgegebenen Solltemperatur gehalten werden.

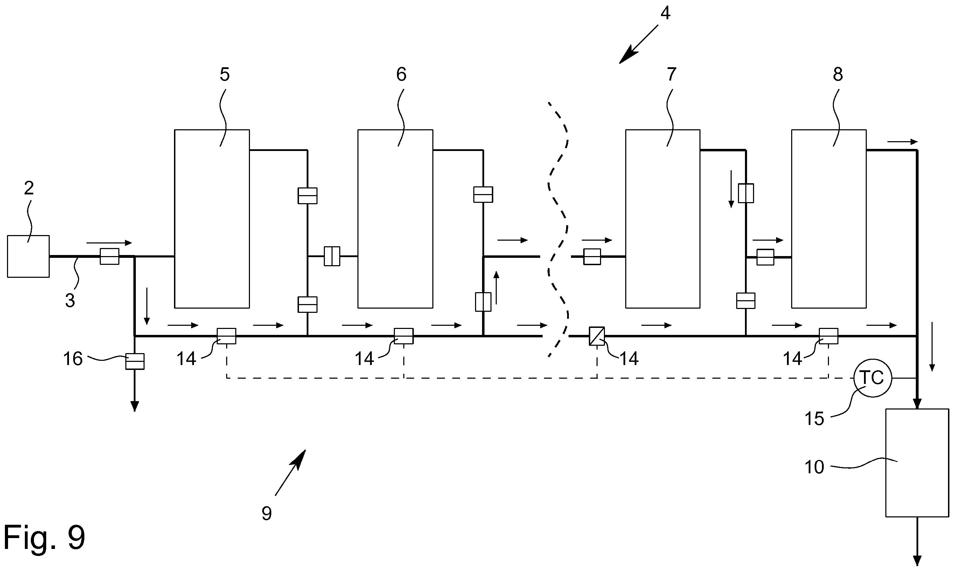

Fig. 9 zeigt den Beladungsvorgang für das dritte Wärmespeichermodul 7 und das vierte Wärmespeichermodul 8, wobei die ersten beiden Wärmespeichermodule 5, 6 bereits vollständig beladen sind. Auch hier muss nicht zwingend eine Bypassführung vorgesehen sein, um das Trägergas 3 an den beiden bereits vollständig beladenen Wärmespeichermodulen 5, 6 vorbeizuleiten. Die Führung der Trägergasströme erfolgt mithilfe geeigneter Ventile, die vorzugsweise regelbar sind, insbesondere in Abhängigkeit von einer gemessenen Trägergastemperatur vor dem Eintritt in die Wärmeübertragungseinrichtung 10.

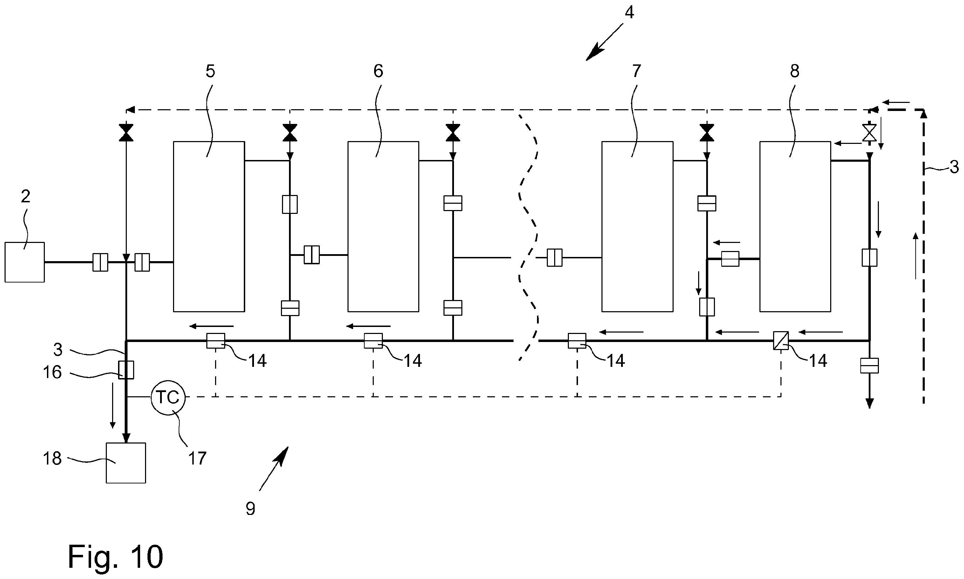

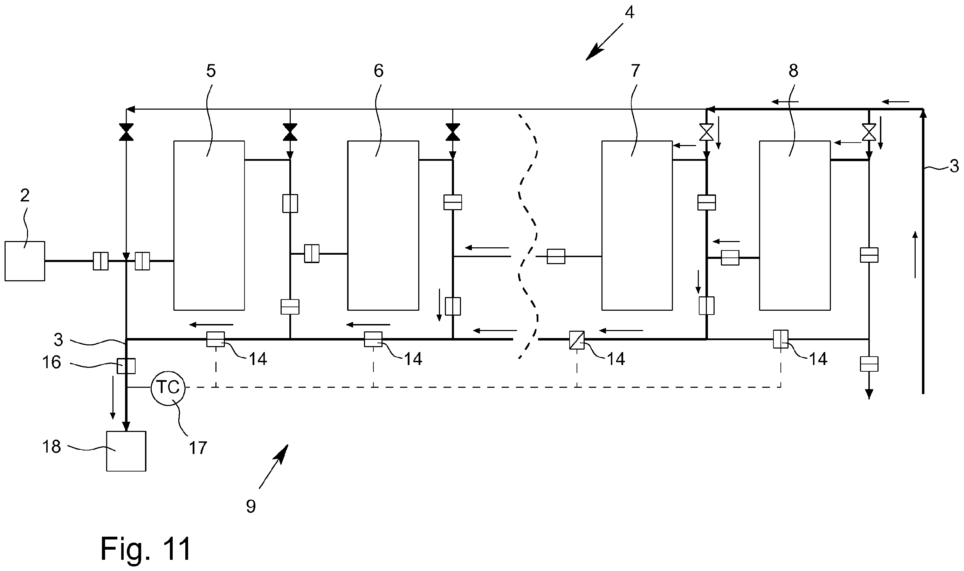

Die Fig. 10 und 11 zeigen beispielhaft und schematisch die Entladung der Wärmespeicherreihe 4, wobei Fig. 10 die Entladung des letzten Wärmespeichermoduls 8 der Wärmespeicherreihe und Fig. 11 die Entladung der letzten beiden Wärmespeichermodule 7, 8 zeigt. Bei dem Entladevorgang wird die Wärmespeicherreihe 4 nachfolgend beginnend mit dem letzten Wärmespeichermodul 8 von einem kälteren Trägergas 3 durchströmt und dabei erhitztes Trägergas 3 einem schematisch dargestellten Verbraucher 18 zugeführt. Zur Messung der Temperatur des heißen Trägergases 3, das zum Verbraucher 18 geleitet wird, ist eine weitere Temperaturmesseinrichtung 17 vorgesehen. Die Steuerung und/oder Regelung der Temperatur des heißen Trägergases 3 kann über Regelventile 16 erfolgen, die die Volumenströme des Trägergases 3 aus den einzelnen Wärmespeichermodulen 7, 8 vorgeben. Der Entladungsvorgang kann grundsätzlich wie in der DE 10 2014 017 346 A1 beschrieben erfolgen.

Die Nutzung des bei der Entladung erhitzten Trägergases 3 kann in einem Dampfkraftprozess, insbesondere in Kombination mit einem Gasexpansionsprozess, vorgesehen sein, um Strom zu erzeugen und/oder das bei einem Entladungsvorgang erhaltene heiße Trägergas 3 kann zur Prozessdampf- und/oder Fernwärmeerzeugung und/oder zur Einkopplung von Wärme in einen Vorwärmprozess eingesetzt werden.

Wie sich aus den Fig. 6 bis 9 im Übrigen ergibt, ist eine Vermischung des Trägergases 3 mit heißem Trägergas 3 aus dem Gaserhitzer 2 vorgesehen, wenn das Trägergas 3 eine festgelegte Mindestbeladungstemperatur für ein nachfolgendes Wärmespeichermodul 6, 7, 8 unterschreitet und für die Beladung des nachfolgenden Wärmespeichermoduls 6 (Fig. 6), 7 (Fig. 7), 8 (Fig. 8) nicht mehr genutzt werden kann und stattdessen im Kreislauf über die Wärmeübertragungseinrichtungen 10, 13 dem Verdichter 6 zugeführt, dort verdichtet und dann dem Gaserhitzer 2 zurückgeführt wird. Das Trägergas 3 tritt gemäß Fig. 9 aus dem letzten Wärmespeichermodul 8 der Wärmespeicherreihe 4 mit einer Trägergastemperatur aus, die vorzugsweise der Mindestbeladungstemperatur entspricht oder auch höher oder tiefer als diese sein kann. Durch die Wärmeübertragungseinrichtungen 10, 13 ist in jedem Fall sichergestellt, dass das Trägergas 3 nach der Kühlung auf Solltemperatur am Verdichtereintritt vorliegt. Liegt die Trägergastemperatur beim Austritt aus dem letzten Wärmespeichermodul 8 der Wärmespeicherreihe 4 dagegen auf einem Temperaturniveau unterhalb der Mindestbeladungstemperatur, kann durch Zufuhr vom heißen Trägergas 3 aus dem Gaserhitzer 2 eine konstante höhere Trägergastemperatur vor dem Eintritt in die Wärmeübertragungseinrichtung 10 eingestellt werden, insbesondere die Mindestbeladungstemperatur. Dies gilt entsprechend für die anderen Wärmespeichermodule 5, 6, 7.

Entsprechendes gilt für die Vermischung des Trägergases 3 aus einem der vorgelagerten Wärmetauschermodule 5, 6, 7, wenn die Trägergastemperatur unter der Mindestbeladungstemperatur des jeweils nachfolgenden Wärmetauschermoduls 6, 7, 8 der Wärmetauscherreihe 4 liegt und eine Kreislaufführung des Trägergases 3 zur erneuten Erhitzung erforderlich ist. Durch Vermischung mit heißem Trägergas 3 aus dem Gaserhitzer 2 lässt sich jeweils das aus einem Wärmetauschermodul 5 bis 8 austretende Trägergas 3 erwärmen und eine vorgegebene, insbesondere konstante Trägergastemperatur vor dem Eintritt in die Wärmeübertragungseinrichtung 10 einstellen.

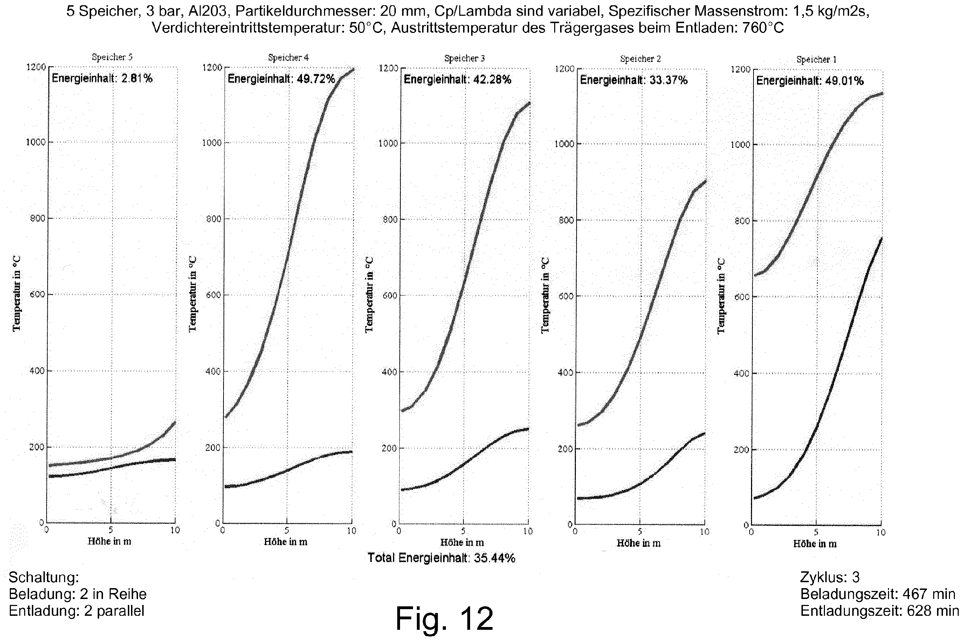

Die Fig. 12 bis 14 zeigen auf der Grundlage von Simulationsergebnissen, dass durch die oben beschriebene Kühlung des Trägergases 3 bei der Kreislaufführung nach dem Austritt aus der Wärmespeicherreihe 4 und vor dem Eintritt in den Verdichter 6 in der Wärmeübertragungseinrichtung 10, insbesondere durch Wärmeübertragung an zum Gaserhitzer 2 zurückgeführtes verdichtetes Trägergas 3, die energetische Ausnutzung der Wärmespeicherreihe erheblich gesteigert werden kann, was mit einer entsprechenden Reduzierung der erforderlichen Speichermassen verbunden ist.

Fig. 12 zeigt das Temperaturprofil einer Wärmespeicheranordnung mit fünf Wärmespeichern, wobei das Trägergas vor dem Eintritt in den Verdichter nicht gekühlt wird. Die maximale Temperaturdifferenz des Trägergases bezogen auf das Ende der Beladung bzw. den Austritt aus der Wärmespeicherreihe und den Eintritt in den Verdichter beträgt 150 °C. Es kann eine Ausnutzung von 35% ermittelt werden. Das Trägergas erreicht bei der Endladung der Wärmespeicherreihe zu Verbrauchszwecken eine Temperatur von 760 °C.

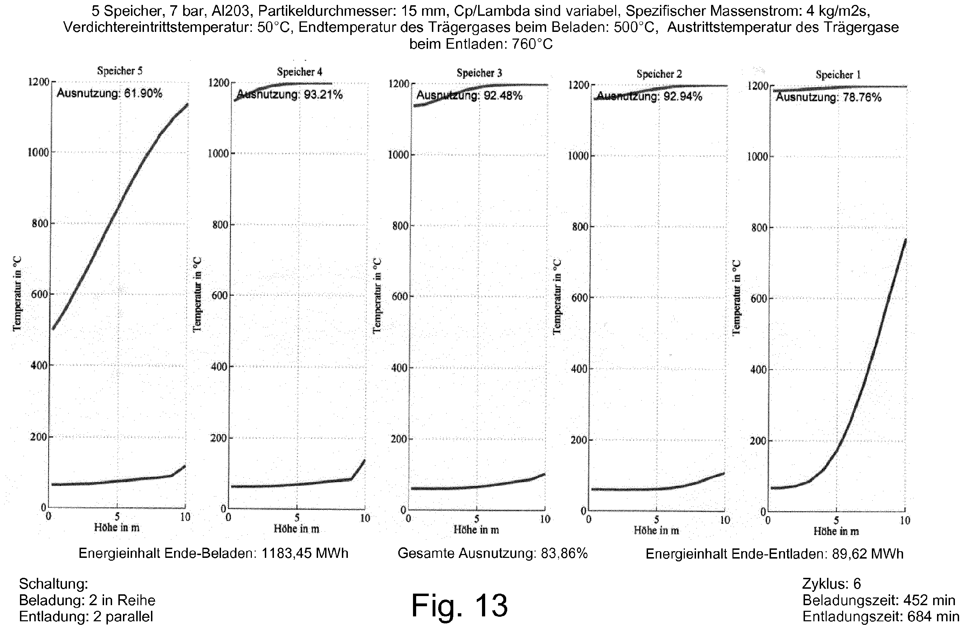

Fig. 13 zeigt das Temperaturprofil einer Wärmespeicheranordnung mit fünf Speichern, wobei das Trägergas bei der Kreislaufführung wie oben beschrieben in einer Wärmeübertragungseinrichtung vor dem Eintritt in den Verdichter durch Wärmeübertragung an das verdichtete Trägergas gekühlt wird. Das Trägergas tritt bei der Beladung der Wärmespeicherreihe mit einer Temperatur von 500 °C aus und wird auf diesem Temperaturniveau der Wärmeübertragungseinrichtung zugeführt. Die Verdichtereintrittstemperatur beträgt konstant beispielsweise 50 °C. Es kann eine Ausnutzung von 84 % ermittelt werden. Die Temperatur des Trägergases bei der Entladung beträgt 760 °C.

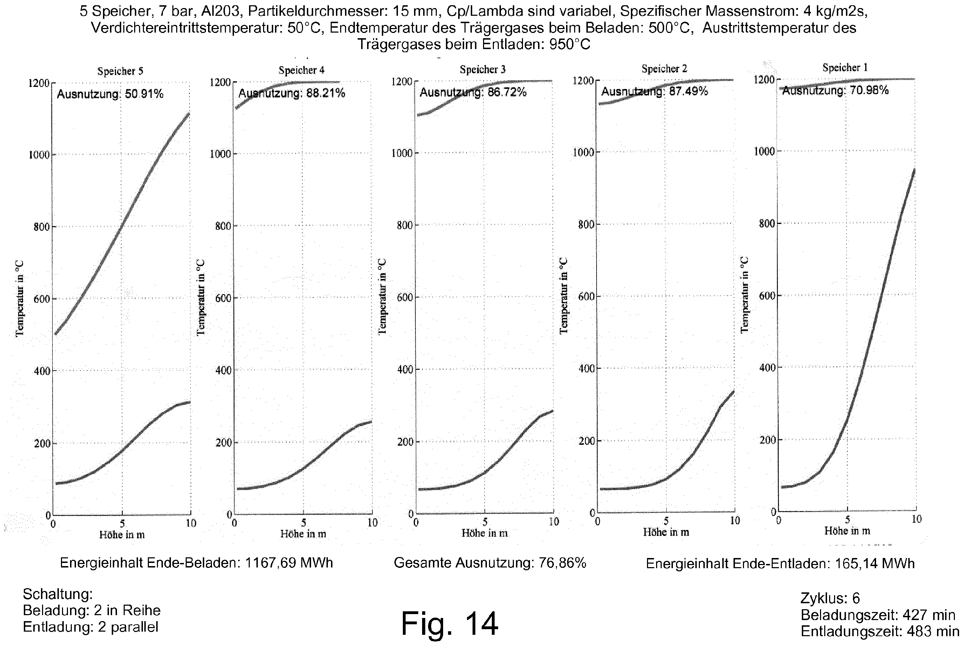

Fig. 14 zeigt das Temperaturprofil einer Wärmespeicheranordnung mit fünf Speichern, wobei wiederum das Trägergas bei der Kreislaufführung vor dem Eintritt in den Verdichter in einer Wärmeübertragungseinrichtung gekühlt wird durch Wärmeübertragung an zum Gaserhitzer zurückgeführtes verdichtetes Trägergas. Die Austrittstemperatur des Trägergases aus der Wärmespeicherreihe beträgt 500 °C. Auf diesem Temperaturniveau wird das Trägergas der Wärmeübertragungseinrichtung zugeführt. Die Temperatur zum Verdichter beträgt beispielsweise konstant 50 °C. Es kann eine Ausnutzung von 76 % ermittelt werden. Die Temperatur des Trägergases bei der Entladung kann bei 950 °C liegen, wobei über eine lange Zeit ein hohes Temperaturniveau zum Verbraucher gehalten werden kann.

**Bezugszeichenliste:**

| | | | |
|---|---|---|---|
| 1 | Wärmespeicheranordnung | 11 | Kühlmittelkreislauf |
| 2 | Gaserhitzer | 12 | Wärmestrom |
| 3 | Trägergas | 13 | Kühler |
| 4 | Wärmespeicherreihe | 14 | Ventil |
| 5 | Wärmespeichermodul | 15 | Temperaturmesseinrichtung |
| 6 | Wärmespeichermodul | 16 | Ventil |
| 7 | Wärmespeichermodul | 17 | Temperaturmesseinrichtung |
| 8 | Wärmespeichermodul | 18 | Verbraucher |
| 9 | Wärmespeicheranordnung | | |
| 10 | Wärmeübertragungseinrichtung | | |

## Patentansprüche

1. Verfahren zum Betreiben einer regenerativen Wärmespeicheranordnung (9), wobei die Wärmespeicheranordnung (9) wenigstens einen Gaserhitzer (2) zur Erhitzung eines Trägergases (3), insbesondere zur Erhitzung von Luft, eine Wärmespeicherreihe (4) mit einer Mehrzahl von Wärmespeichermodulen (5) und wenigstens einen Verdichter (6) aufweist, wobei während eines Beladungszyklus wenigstens ein Wärmespeichermodul (5 - 8), vorzugsweise eine Mehrzahl von nachfolgenden Wärmespeichermodulen (5 - 8) der Wärmespeicherreihe (4), von im Gaserhitzer (2) erhitztem Trägergas (3) durchströmt und durch Wärmeübertragung von dem erhitzten Trägergas (3) an ein Wärmespeichermaterial des Wärmespeichermoduls (5 - 8) thermisch beladen und das Trägergas (3) bei der Beladung abgekühlt wird, wobei das Trägergas (3), wenn die Trägergastemperatur nach dem Beladen eines Wärmespeichermoduls (5 - 7) eine Mindestbeladungstemperatur eines in der Wärmespeicherreihe (4) nachfolgenden Wärmespeichermoduls (6 - 8) erreicht oder überschreitet, dem nachfolgenden Wärmespeichermodul (6 - 8) zur Beladung zugeführt wird, und wobei eine Kreislaufführung des Trägergases (3) vorgesehen ist, wenn die Trägergastemperatur die Mindestbeladungstemperatur des nachfolgenden Wärmespeichermoduls (6 - 8) unterschreitet, und das Trägergas (3) bei der Kreislaufführung dem Verdichter (6) zugeführt und nach der Verdichtung zum Gaserhitzer (2) für eine erneute Erhitzung des Trägergases (3) zurückgeführt wird, **dadurch gekennzeichnet, dass** eine Mindestbeladungstemperatur oberhalb einer zulässigen Solltemperatur am Verdichtereintritt gewählt wird und dass das Trägergas (3) bei der Kreislaufführung vor dem Eintritt in den Verdichter (6) gekühlt wird, wenn die Trägergastemperatur oberhalb der zulässigen Solltemperatur am Verdichtereintritt liegt.

2. Verfahren nach Anspruch 1, wobei die Mindestbeladungstemperatur mehr als 250 °C, vorzugsweise mehr als 350 °C, weiter vorzugsweise zwischen 350 °C und 700 °C, besonders bevorzugt 400 °C bis 600 °C, beträgt.

3. Verfahren nach Anspruch 1 oder 2, wobei im Strömungsweg des Trägergases (3) nach dem Austritt aus der Wärmespeicherreihe (4) und vor dem Verdichter (6) wenigstens eine Wärmeübertragungseinrichtung (10) vorgesehen wird, um das Trägergases (3) bei der Kreislaufführung insbesondere durch Wärmeübertragung an zum Gaserhitzer (2) zurückgeführtes verdichtetes Trägergas (3) zu kühlen.

4. Verfahren nach einem der vorhergehenden Ansprüche, wobei Trägergas (3) insbesondere durch Wärmeübertragung an zum Gaserhitzer (2) zurückgeführtes verdichtetes Trägergas (3) auf eine Temperatur größer oder gleich 60 °C, vorzugsweise 80 °C bis 100 °C, gekühlt wird.

5. Verfahren nach einem der Ansprüche 3 oder 4, wobei im Strömungsweg des Trägergases (3) nach der Wärmeübertragungseinrichtung (10) und vor dem Verdichter (6) wenigstens ein Kühler (13) vorgesehen wird, um das Trägergas (3) auf die Solltemperatur am Verdichtereintritt zu kühlen.

6. Verfahren nach einem der vorhergehenden Ansprüche, wobei die Solltemperatur am Verdichtereintritt weniger als 70 °C, vorzugsweise weniger als 60°C, weiter vorzugsweise 50 °C oder weniger, beträgt.

7. Verfahren nach einem der vorhergehenden Ansprüche, wobei das Trägergas (3) bei der Kreislaufführung nach dem Austritt aus einem Wärmespeichermodul (5 - 8) und vor dem Eintritt in den Verdichter (6) mit heißem Trägergas (3) aus dem Gaserhitzer (2) vermischt wird, um die Trägergastemperatur zu regeln, insbesondere konstant zu halten.

8. Wärmespeicheranordnung (9), dazu ausgebildet und/oder eingerichtet, um nach einem Verfahren nach einem der vorhergehenden Ansprüche betrieben zu werden, mit wenigstens einem Gaserhitzer (2) zur Erhitzung eines Trägergases (3), insbesondere von Luft, mit wenigstens einer Wärmespeicherreihe (4) mit einer Mehrzahl von Wärmespeichermodulen (5 - 8) und mit wenigstens einem Verdichter (6), wobei wenigstens ein Wärmespeichermodul (5 - 8), vorzugsweise eine Mehrzahl von nachfolgenden Wärmespeichermodulen (5 - 8) der Wärmespeicherreihe (4), während eines Beladungszyklus von im Gaserhitzer (2) erhitztem Trägergas (3) durchströmbar und durch Wärmeübertragung von dem erhitzten Trägergas (3) an ein Wärmespeichermaterial des Wärmespeichermoduls (5 - 8) thermisch beladbar ist, wobei während des Beladungszyklus eine Kreislaufführung des Trägergases (3) vorgesehen und bei der Beladung abgekühltes Trägergas (3) nach dem Durchströmen des wenigstens einen Wärmespeichermoduls (5 - 8), vorzugsweise nach dem Durchströmen einer Mehrzahl von nachfolgenden Wärmespeichermodulen (5 - 8) der Wärmespeicherreihe (4), dem Verdichter (6) zuführbar und über den Verdichter (6) zum Gaserhitzer (2) zurückführbar ist, **dadurch gekennzeichnet, dass** im Strömungsweg des Trägergases (3) wenigstens eine zwischen der Wärmespeicherreihe (4) und dem Verdichter (6) angeordnete Wärmeübertragungseinrichtung (10, 13) zur Kühlung des Trägergases (3) bei der Kreislaufführung und vor dem Eintritt in den Verdichter (6) vorgesehen ist.

9. Verfahren zum Ausgleich von Lastspitzen bei der Erzeugung von elektrischer Energie und/oder zur insbesondere dezentralen Erzeugung von elektrischer Energie durch Nutzung der Wärme von erhitzem Trägergas (3) für die Stromerzeugung in einem thermoelektrischen Speicherkraftwerk und/oder zur Nutzung der Wärme von erhitzem Trägergas (3) zur Prozessdampf- und/oder zur Fernwärmeerzeugung und/oder zur Einkopplung von Wärme in einen Vorwärmprozess, wobei das Speicherkraftwerk eine regenerativen Wärmespeicheranordnung (9) mit wenigstens einem Gaserhitzer (2), eine Wärmespeicherreihe (4) mit einer Mehrzahl von Wärmespeichermodulen (5 - 8) und wenigstens einen Verdichter (6) aufweist und die Wärmespeicheranordnung (9) nach einem Verfahren nach einem der vorhergehenden Ansprüche betrieben wird, insbesondere mit einer Wärmespeicheranordnung (9) nach Anspruch 9, mit den Schritten
- Erhitzung von Trägergas (3), insbesondere von Heißluft, in wenigstens einem Gaserhitzer (2),
- thermische Beladung von wenigstens einem Wärmespeichermodul (5 - 8) einer Mehrzahl von Wärmespeichermodulen (5 - 8) des Speicherkraftwerkes durch Wärmeabgabe von dem im Gaserhitzer (2) erhitzten Trägergas (3) an ein Wärmespeichermaterial des Wärmespeichermoduls (5 - 8),
- zeitversetzte thermische Entladung von wenigstens einem Wärmespeichermodul (5 - 8), vorzugsweise einer Mehrzahl von Wärmespeichermodulen (5 - 8), wobei wenigstens ein Wärmespeichermodul (5 - 8) von kälterem Trägergas (3), insbesondere von Kaltluft, durchströmt und Wärme von dem Wärmespeichermaterial an das kältere Trägergas (3) zur Erhitzung des Trägergases (3) übertragen wird, und
- Nutzung des bei der Entladung des wenigstens einen Wärmespeichermoduls (5 - 8) erhitzten Trägergases (3) zur Stromerzeugung in einem Dampfkraftprozess, insbesondere in Kombination mit einem Gasexpansionsprozess, und/oder zur Prozessdampf- und/oder zur Fernwärmeerzeugung und/oder zur Einkopplung von Wärme in einen Vorwärmprozess.

## Claims

1. Method for operating a regenerative heat storage arrangement (9), the heat storage arrangement (9) having at least one gas heater (2) for heating a carrier gas (3), in particular for heating air, a heat storage row (4) with a plurality of heat storage modules (5) and at least one compressor (6), wherein during a charging cycle at least one heat storage module (5 - 8), preferably a plurality of subsequent heat storage modules (5 - 8) of the heat storage row (4), is flowed through by carrier gas (3) heated in the gas heater (2), preferably a plurality of subsequent heat storage modules (5 - 8) of the heat storage row (4), being flowed through by carrier gas (3) heated in the gas heater (2) and being thermally charged by heat transfer from the heated carrier gas (3) to a heat storage material of the heat storage module (5 - 8) and the carrier gas (3) being cooled during the charging, wherein the carrier gas (3), if the carrier gas temperature, after loading of a heat storage module (5 - 7), reaches or exceeds a minimum loading temperature of a subsequent heat storage module (6 - 8) in the heat storage row (4), is supplied to the subsequent heat storage module (6 - 8) for loading, and wherein a circulation of the carrier gas (3) is provided if the carrier gas temperature falls below the minimum loading temperature of the subsequent heat storage module (6 - 8), and the carrier gas (3) is fed to the compressor (6) during the circulation and, after compression, is returned to the gas heater (2) for renewed heating of the carrier gas (3), **characterized in that** a minimum charging temperature above a permissible setpoint temperature at the compressor inlet is selected, and **in that** the carrier gas (3) is cooled during the circulation before entering the compressor (6) if the carrier gas temperature is above the permissible setpoint temperature at the compressor inlet.

2. Process according to claim 1, wherein the minimum loading temperature is more than 250 °C, preferably more than 350 °C, further preferably between 350 °C and 700 °C, more preferably 400 °C to 600 °C.

3. Method according to claim 1 or 2, wherein at least one heat transfer device (10) is provided in the flow path of the carrier gas (3) after the exit from the heat storage row (4) and before the compressor (6) in order to cool the carrier gas (3) during recirculation, in particular by heat transfer to compressed carrier gas (3) returned to the gas heater (2).

4. Process according to any one of the preceding claims, wherein the carrier gas (3) is cooled to a temperature greater than or equal to 60 °C, preferably 80 °C to 100 °C, in particular by heat transfer to compressed carrier gas (3) recycled to the gas heater (2).

5. Method according to one of claims 3 or 4, wherein at least one cooler (13) is provided in the flow path of the carrier gas (3) downstream of the heat transfer device (10) and upstream of the compressor (6) in order to cool the carrier gas (3) to the desired temperature at the compressor inlet.

6. A method according to any one of the preceding claims, wherein the set point temperature at the compressor inlet is less than 70°C, preferably less than 60°C, further preferably 50°C or less.

7. Method according to one of the preceding claims, wherein the carrier gas (3) is mixed with hot carrier gas (3) from the gas heater (2) during recirculation after exiting a heat storage module (5 - 8) and before entering the compressor (6) in order to control the carrier gas temperature, in particular to keep it constant.

8. Heat storage arrangement (9), designed and/or set up to be operated by a method according to one of the preceding claims, having at least one gas heater (2) for heating a carrier gas (3), in particular air, having at least one heat storage row (4) with a plurality of heat storage modules (5 - 8) and having at least one compressor (6), wherein at least one heat storage module (5 - 8), preferably a plurality of subsequent heat storage modules (5 - 8) of the heat storage row (4), can be flowed through during a charging cycle by carrier gas (3) heated in the gas heater (2) and can be thermally charged by heat transfer from the heated carrier gas (3) to a heat storage material of the heat storage module (5 - 8), wherein during the charging cycle a circulation of the carrier gas (3) is provided and during the charging cooled carrier gas (3) after flowing through the at least one heat storage module (5 - 8), preferably after flowing through a plurality of subsequent heat storage modules (5 - 8) of the heat storage row (4), can be fed to the compressor (6) and returned to the gas heater (2) via the compressor (6), **characterized in that** at least one heat transfer device (10, 13) arranged between the heat storage row (4) and the compressor (6) is provided in the flow path of the carrier gas (3) for cooling the carrier gas (3) during the circulation and before entry into the compressor (6).

9. Method for balancing load peaks in the generation of electrical energy and/or for, in particular, decentralised generation of electrical energy by utilising the heat of heated carrier gas (3) for electricity generation in a thermoelectric storage power station and/or for utilising the heat of heated carrier gas (3) for process steam generation and/or for district heating generation and/or for coupling heat into a preheating process, the storage power station having a regenerative heat storage arrangement (9) with at least one gas heater (2), a heat storage row (4) with a plurality of heat storage modules (5 - 8) and at least one compressor (6), and the heat storage arrangement (9) being operated by a method according to one of the preceding claims, in particular with a heat storage arrangement (9) according to claim 9, having the steps of
- heating of carrier gas (3), in particular hot air, in at least one gas heater (2),
- thermal charging of at least one heat storage module (5 - 8) of a plurality of heat storage modules (5 - 8) of the storage power plant by heat release from the carrier gas (3) heated in the gas heater (2) to a heat storage material of the heat storage module (5 - 8),
- time-delayed thermal discharge of at least one heat storage module (5 - 8), preferably a plurality of heat storage modules (5 - 8), wherein at least one heat storage module (5 - 8) is flowed through by colder carrier gas (3), in particular by cold air, and heat is transferred from the heat storage material to the colder carrier gas (3) for heating the carrier gas (3), and
- use of the carrier gas (3) heated during the discharge of the at least one heat storage module (5 - 8) for power generation in a steam power process, in particular in combination with a gas expansion process, and/or for process steam generation and/or for district heat generation and/or for coupling heat into a preheating process.

## Revendications

1. Procédé de fonctionnement d'un ensemble accumulateur de chaleur régénératif (9), l' ensemble accumulateur de chaleur (9) comportant au moins un réchauffeur de gaz (2) pour chauffer un gaz porteur (3), en particulier pour chauffer de l'air, une rangée d'accumulation de chaleur (4) avec une pluralité de modules d'accumulation de chaleur (5) et comporte au moins un compresseur (6), dans lequel, pendant un cycle de chargement, le gaz porteur (3) chauffé dans le réchauffeur de gaz (2) circule à travers au moins un module d'accumulation de chaleur (5 - 8), de préférence une pluralité de modules d'accumulation de chaleur suivants (5 - 8) de la rangée d'accumulation de chaleur (4) et chargés thermiquement par transfert de chaleur du gaz porteur chauffé (3) à un matériau d'accumulation de chaleur du module d'accumulation de chaleur (5 - 8) et le gaz porteur (3) est refroidi pendant le chargement, dans lequel le gaz porteur (3) lorsque la température du gaz porteur après le chargement d'un module d'accumulation de chaleur (5 - 7) atteint ou dépasse une température de chargement minimale d'un module d'accumulation de chaleur suivant (6 - 8) dans la rangée d'accumulation de chaleur (4), est acheminé vers le module d'accumulation de chaleur suivant (6 - 8) pour être chargé, et le gaz porteur (3) est mis en circulation si la température du gaz porteur tombe en dessous de la température de charge minimale du module d'accumulation de chaleur suivant (6 - 8), et le gaz porteur (3) pendant la circulation est envoyé au compresseur (6) et, après compression, renvoyé au réchauffeur de gaz (2) pour un nouveau chauffage du gaz porteur (3), **caractérisé en ce qu'**une température de charge minimale au-dessus d'une température cible admissible à l'entrée du compresseur est sélectionnée et que le gaz porteur (3) au niveau de la circulation est refroidi avant d'entrer dans le compresseur (6) si la température du gaz porteur est supérieure à la température cible admissible à l'entrée du compresseur.

2. Procédé selon la revendication 1, dans lequel la température de chargement minimale est supérieure à 250°C, de préférence supérieure à 350°C, plus préférablement entre 350°C et 700°C, plus préférablement 400°C à 600°C.

3. Procédé selon la revendication 1 ou 2, dans lequel au moins un dispositif de transfert de chaleur (10) est prévu dans le trajet d'écoulement du gaz porteur (3) après sa sortie de la rangée d'accumulation de chaleur (4) et avant le compresseur (6), afin de refroidir le gaz porteur (3) pendant la circulation notamment par transfert de chaleur au gaz porteur (3) comprimé renvoyé au réchauffeur de gaz (2).

4. Procédé selon l'une quelconque des revendications précédentes, dans lequel le gaz porteur (3) est refroidi à une température supérieure ou égale à 60°C, de préférence de 80°C à 100°C, notamment par transfert de chaleur au gaz porteur (3) comprimé renvoyé au réchauffeur de gaz (2).

5. Procédé selon l'une des revendications 3 ou 4, dans lequel au moins un refroidisseur (13) est prévu dans le trajet d'écoulement du gaz porteur (3) après le dispositif de transfert de chaleur (10) et avant le compresseur (6) afin d'amener le gaz vecteur (3) à la température souhaitée à l'entrée du compresseur pour le refroidir.

6. Procédé selon l'une quelconque des revendications précédentes, dans lequel la température souhaitée à l'entrée du compresseur est inférieure à 70°C, de préférence inférieure à 60°C, plus préférentiellement 50°C ou moins.

7. Procédé selon l'une quelconque des revendications précédentes, dans lequel le gaz porteur (3) est mélangé au gaz porteur (3) chaud provenant du réchauffeur de gaz (2) pendant la circulation après la sortie d'un module d'accumulation de chaleur (5 - 8) et avant d'entrer dans le compresseur (6) pour réguler la température du gaz porteur, notamment pour la maintenir constante.

8. Agencement d'accumulation de chaleur (9), conçu et/ou configuré pour fonctionner selon un procédé selon l'une quelconque des revendications précédentes, avec au moins un réchauffeur de gaz (2) pour chauffer un gaz porteur (3), en particulier de l'air, avec au moins une rangée d'accumulation de chaleur (4) avec une pluralité de modules d'accumulation de chaleur (5 - 8) et avec au moins un compresseur (6), dans lequel au moins dans un module d'accumulation de chaleur (5 - 8), de préférence une pluralité de modules d'accumulation de chaleur (5 - 8) de la rangée d'accumulation de chaleur (4), pendant un cycle de chargement, le gaz porteur (3) chauffé dans le réchauffeur de gaz (2) peut circuler et être chargé thermiquement par transfert de chaleur à partir du gaz porteur chauffé (3) à un matériau d'accumulation de chaleur du module d'accumulation de chaleur (5 - 8), le gaz porteur (3) étant mis en circulation pendant le cycle de chargement et avec le gaz porteur refroidi de chargement (3) après avoir traversé l'au moins un module d'accumulation (5 - 8), de préférence après écoulement à travers une pluralité de modules d'accumulation de chaleur suivants (5 - 8) de la rangée d'accumulation de chaleur (4), qui peut être amené au compresseur (6) et renvoyé via le compresseur (6) au réchauffeur de gaz (2), **caractérisé en ce que dans le trajet d'écoulement du** gaz porteur (3) au moins un dispositif de transfert de chaleur (10, 13) disposé entre la rangée d'accumulation de chaleur (4) et le compresseur (6) est prévu pour refroidir le gaz porteur (3) pendant la circulation et avant son entrée dans le compresseur (6).

9. Procédé pour équilibrer les pointes de charge lors de la production d'énergie électrique et/ou pour la production d'énergie électrique en particulier décentralisée en utilisant la chaleur d'un gaz porteur (3) chauffé pour produire de l'électricité dans une centrale à accumulation thermoélectrique et/ou pour utiliser la chaleur à partir d'un gaz porteur chauffé (3) pour produire de la vapeur de processus et/ou un chauffage urbain et/ou pour injecter de la chaleur dans un processus de préchauffage, la centrale à accumulation ayant un ensemble d'accumulation de chaleur régénératif (9) avec au moins un réchauffeur de gaz (2), une rangée d'accumulation de chaleur (4) avec plusieurs modules d'accumulation de chaleur (5 - 8) et au moins un compresseur (6) et l'ensemble accumulateur de chaleur (9) fonctionne selon un procédé selon l'une quelconque des revendications précédentes, en particulier avec un ensemble accumulateur de chaleur (9) selon la revendication 9, avec les étapes
- chauffage du gaz porteur (3), en particulier d'air chaud, dans au moins un réchauffeur de gaz (2),
- chargement thermique d'au moins un module d'accumulation de chaleur (5 - 8) d'une pluralité de modules d'accumulation de chaleur (5 - 8) de la centrale d'accumulation en libérant de la chaleur du gaz porteur (3) chauffé dans le réchauffeur de gaz (2) pour un matériau d'accumulation de chaleur du module d'accumulation de chaleur (5 - 8),
- décharge thermique temporisée d'au moins un module d'accumulation de chaleur (5 - 8), de préférence d'une pluralité de modules d'accumulation de chaleur (5 - 8), un gaz porteur plus froid (3), en particulier de l'air froid, circulant à travers au moins un module d'accumulation de chaleur module (5 - 8) et la chaleur du matériau d'accumulation de chaleur est transférée au gaz porteur plus froid (3) pour chauffer le gaz porteur (3), et
- utilisation du gaz porteur (3) chauffé lors de la décharge d'au moins un module d'accumulation de chaleur (5 - 8) pour générer de l'électricité dans un processus de production de vapeur, en particulier en combinaison avec un processus de détente de gaz, et/ou pour générer un processus vapeur et/ou pour le chauffage urbain et/ou pour injecter de la chaleur dans un processus de préchauffage.
